# EUROPÄISCHE PATENTSCHRIFT

(11) **EP 1 068 562 B1**
(45) Veröffentlichungstag und Bekanntmachung des Hinweises auf die Patenterteilung: **05.03.2003**
(21) Anmeldenummer: 99919167.9
(22) Anmeldetag: 31.03.1999
(51) Int. Cl.: G05B 19/042

(54) **PROGRAMMGESTEUERTES HAUSHALTGERÄT**
PROGRAM-CONTROLLED HOUSEHOLD APPLIANCE
APPAREIL ELECTROMENAGER COMMANDE PAR PROGRAMME

(30) Priorität: 31.03.1998 DE 19814446
(43) Veröffentlichungstag der Anmeldung: 17.01.2001
(73) Patentinhaber: BSH Bosch und Siemens Hausgeräte GmbH, 81669 München (DE)
(72) Erfinder: KNOPP, Lothar, D-12209 Berlin (DE); BÖLDT, Frank, D-14656 Brieselang (DE)
(74) Vertreter: Dosterschill, Peter, Dr.
(86) Internationale Anmeldenummer: EP9902211
(87) Internationale Veröffentlichungsnummer: WO99050724

(56) Entgegenhaltungen:
- EP-A- 0 408 431
- EP-A- 0 715 235
- DE-A- 4 001 279
- US-A- 4 404 625
- US-A- 4 520 248

## Beschreibung

Die vorliegende Erfindung betrifft ein programmgesteuertes Haushaltgerät mit einer Bedienblende, nach dem Oberbegriff des Anspruchs 1. Programmgesteuerte Haushaltgeräte insbesondere Waschmaschinen und Wäschetrockner bzw. kombinierte Wasch-Trockner sind seit langem bekannt. Mikroprozessorgeführte Programmsteuerungen haben die Vielfalt von Programmabläufen solcher Haushaltgeräte unüberschaubar vermehrt.

Aus der DE 44 22 128 A1 ist ein Haushaltgerät bekannt, bei dem eine Anpassung der werkseitigen Programmvorgaben an Kundenwünsche dadurch ermöglicht wird, daß die elektronische Steuerung über eine Datenein- und Datenausgabeeinheit mit einem Display frei programmierbar ist. Dazu müssen auf nicht näher erläuterte Weise weitere Daten bzw. Parameter eingegeben werden, damit die vorhandenen Programmvorgaben variiert bzw. ergänzt werden können. Da Angaben über die Art und Weise der Eingaben fehlen, sind gemäß anderen bekannten Haushaltgeräten dieser Art zusätzliche Eingabehandhaben vorzusehen, die für den Aufruf abgespeicherter Programmvorgaben selbst nicht nötig sind. Die dort angegebene Ausgestaltung benötigt weiterhin ein Display.

Es sind weiterhin Waschmaschinen bekannt, in deren Bedienblenden ebenfalls Handhaben zum Einstellen von bestimmten Programmfunktionen angeordnet sind. Logische Verknüpfungen der Bedienung dieser Handhaben sind darin so eingerichtet, daß eingeweihte Personen, beispielsweise Kundendiensttechniker, durch Eingabe eines Codes von bestimmten Bedienungshandlungen, nämlich die Reihenfolge der Betätigung einzelner Bedienungshandhaben, bestimmte Funktionen oder bestimmte Kundendienstprogramme aufrufen können, deren Verlauf dem Kundendiensttechniker bei der Beobachtung der Waschmaschine Aufschlüsse über deren ordnungsgemäßen Betriebsprogrammablauf geben kann, dessen tatsächlicher Ablauf jedoch nachteiligerweise für die benötigte Beobachtung erheblich zu lange dauern würde. Andererseits können durch geeignete Codierungen sogenannte Demonstrationsprogramme aufgerufen werden, bei denen ein bestimmter Betriebsprogrammablauf der Maschine simuliert wird, ohne daß Funktionselemente der Waschmaschine tatsächlich betrieben werden. Dadurch sind installierte Programmabläufe an der Bedienblende der Waschmaschine demonstrierbar.

Weiterhin ist ein Verfahren zur Speicherung und Rückausgabe eines von einem Prozessor auszuführenden modifizierbaren Programmes bekannt (EP-A-408 431), das im Zusammenhang mit einer elektronischen Programmsteuerung bei Waschmaschinen anwendbar ist. Darin wird eine Möglichkeit zur Änderung eines eingespeicherten Progrmmes durch den Hersteller des Speichers, des Programmsteuergerätes oder des Haushaltgerätes offenbart. Dazu werden vorhandene Teile des Programms unterdrückt oder gegen andere Teile ausgetauscht. Dazu wird nur auf die im Festspeicher gespeicherten Daten eingewirkt, die beispielsweise für jeden Teil einer Ebene des hierarchisch gegliederten Speichers im Hinblick auf ihre Adresse markiert werden. Damit kann Speichervolumen gespart werden.

Bei allen vorgenannten programmgesteuerten Haushaltgeräten des Standes der Technik ist jedoch nachteilig, daß die Ausgestaltung der Bedienblenden und der Zuordnung der Handhaben bzw. Tasten sehr speziell ist und eine Vielzahl von körperlich unterschiedlichen konkreten Ausführungsformen benötigt. Dies führt zu einer Vielzahl von unterschiedlichen Baugruppen, insbesondere Bedienblenden und für sie wiederum speziell angefertigte Steuerungsplatinen, die dahinter angeordnet sind.

In einem anderen bekannten Haushaltgerät (EP-A-715 235) kann der Inhalt eines Programmspeichers durch Einwirkung von außen über eine optoelektronische Schnittstelle mittels eines externen Datenverarbeitungsgerätes verändert werden. Dies erfordert aber spezielle Apparaturen und Software, welche die Maßnahmen zur Anpassung des Programmspeichers an neue Anforderungen enorm verkomplizieren.

Andererseits können durch geeignete Codierungen sogenannte Demonstrationsprogramme aufgerufen werden, bei denen ein bestimmter Betriebsprogrammablauf der Maschine simuliert wird, ohne daß Funktionselemente der Waschmaschine tatsächlich betrieben werden. Dadurch sind installierte Programmabläufe an der Bedienblende der Waschmaschine demonstrierbar.

Bei allen vorgenannten programmgesteuerten Haushaltgeräten des Standes der Technik ist jedoch nachteilig, daß die Ausgestaltung der Bedienblenden und der Zuordnung der Handhaben bzw. Tasten sehr speziell ist und eine Vielzahl von körperlich unterschiedlichen konkreten Ausführungsformen benötigt. Dies führt zu einer Vielzahl von unterschiedlichen Baugruppen, insbesondere Bedienblenden und für sie wiederum speziell angefertigte Steuerungsplatinen, die dahinter angeordnet sind.

Der vorliegenden Erfindung liegt deshalb die Aufgabe zugrunde, ein programmgesteuertes Haushaltgerät der eingangs genannten Art derart zu verbessern, daß insbesondere im Rahmen des Herstellungsprozesses universelle Steuerungsplatinen mit entsprechenden Schalterelementen verwendet werden können, so daß eine erhebliche Verringerung speziell ausgestalteter Baugruppen ermöglicht wird.

Diese Aufgabe wird durch die Merkmale des Anspruchs 1 gelöst.

Das programmgesteuerte Haushaltgerät mit einer Bedienblende gemäß der vorliegenden Erfindung zeichnet sich somit dadurch aus, daß jeder Funktion im Programmablauf ein bestimmter Softwarecode, beispielsweise, Zahlencode, zugeordnet ist, der in bestimmten Speicherzellen abgespeichert ist, und daß jeder Schalter mit einer bestimmten Funktion aus der jeweils zugeordneten Speicherzelle belegbar ist.

Mit der vorliegenden Erfindung lassen sich eine Reihe deutlicher Vorteile gegenüber Geräten des Standes der Technik erzielen.

Zunächst wird eine erhebliche Reduzierung von Hardwarevarianten erreicht, da die vorgesehenen universellen Baugruppen, insbesondere die Steuerungsplatinen, universell für eine Vielzahl von bestimmten Typen einer Haushaltgerätereihe ausgestaltet werden und je nach Typ im Rahmen des Herstellungsprozesses angepaßt werden können. Dies wird durch eine freie Zuordnung von Funktionen zu den Schaltern der Bedienelemente ermöglicht, was wiederum den großen Vorteil hat, daß Modelländerungen und Anpassungen des jeweiligen Haushaltgeräts ohne körperliche Änderung der Baugruppen durchgeführt werden können.

Wenn zum Speichern des Softwarecodes eine Schnittstelle mit dem Steuergerät verbunden ist, über die ein Dateneingabegerät mit den Speicherzellen verbindbar ist, kann die Tastenbelegung in beliebiger Weise von außerhalb des Haushaltgerätes erfolgen. Dann ist dazu zwar ein Eingriff von außen erforderlich; jedoch können die Haushaltgeräte in der Fertigung an einem Programmierplatz automatisch auf die zutreffende Weise eingestellt werden.

Andererseits kann zum Speichern des Softwarecodes auch eine jeweils vorbestimmte Kombination von Bedienungshandlungen vorgesehen sein. Dann kann u. U. auch der Kundendienst nach Inbetriebnahme beim Kunden ein solches Haushaltgerät auf eine neue Programmierung umstellen.

Ein weiterer besonderer Vorteil ergibt sich in der flexiblen Gestaltung des Erscheinungsbildes der Blende, insbesondere durch die Wahl der Anzahl, der Lage und der Form der Tasten an der oder auf der Bedienblende. So kann die Wahl der Tasten je nach Gerätetyp in einer breiten oder schmalen Ausführung erfolgen und darüber hinaus vorteilhafterweise die Funktionsreihenfolge frei festgelegt werden.

So ergibt sich der Vorteil, daß neue Bedienelemente bzw. Betriebsschritte im jeweiligen Haushaltgerät ohne körperliche Änderung seiner Bedienblenden-Platine hinzugefügt werden können. Dies geschieht gemäß der Erfindung durch Belegen der jeweiligen Schalter mit den gewünschten neuen Funktionen, die das geänderte Haushaltgerät aufweisen soll.

Eine besondere Flexibilität in der Belegung der Bedienelemente und deren Ausgestaltung ergibt sich dadurch, daß ein Schalter mit einem Softwarecode für "unbelegt" in der zugeordneten Speicherzelle belegbar ist. Damit wird erreicht, daß auch für besonders einfach ausgestaltete Haushaltgeräte die Baugruppen erheblich komplizierter programmierbarer Haushaltgeräte verwendet werden können, die aufgrund ihres Massenartikelcharakters entsprechend kostengünstiger hergestellt werden können. "Abgespeckte" Baugruppen sind dagegen als spezielle Ausgestaltungen für eine kleine Stückzahl erheblich teurer.
"Unbelegte" Schalter werden dann entweder von daneben liegenden, breiter gestalteten Tasten mitüberdeckt, ohne über diese Tasten angesprochen werden zu können, oder verschwinden hinter Bereichen einer mit entsprechend kleineren Tastenfenstern ausgebildeten Bedienblende.

So ist beispielsweise vorstellbar, daß drei Tastenelemente für drei auf der Platine vorhandene Schalter mit entsprechenden Funktionen durch ein alle drei Schalter überdeckendes, aber nur den mittleren Schalter betätigendes Tastenelement ersetzt werden, wobei bei Betätigen des einen Tastenelementes nur die eine Funktion des mittleren Schalters aufgerufen wird und die anderen beiden Funktionen der daneben liegenden Schalter "unbelegt" sind, d. h. diese Funktionen sind bei diesem Haushaltgerät nicht vorhanden.

Andererseits ist bei Überdeckung von zwei oder mehreren Schaltern durch eine breitere Taste von besonderem Vorteil, wenn alle Schalter gleich programmiert sind. Damit erhöht sich die Schaltsicherheit, weil ein möglicherweise verunreinigter Schalter mit Schaltaussetzern durch seinen oder einen seiner "Nachbarn" unterstützt werden kann.

Vorteilhafterweise kann auch eine Anzahl von unbelegten Schaltern auf Vorrat in den Baugruppen vorgesehen sein, so daß im Rahmen von neuen Entwicklungen bzw. Weiterentwicklungen neu in das Haushaltgerät aufgenommene Funktionen ohne körperliche Änderung der Baugruppen implementiert werden können.

Als eine besonders wirksame und kostengünstige Ausgestaltung wird eine Bedienblende in Form einer Folienabdeckung vorgeschlagen, die in den gewünschten Tastenbereichen weicher ist als in den Nichttastenbereichen. Damit ist nur eine leichte Berührung der entsprechenden Tasten in den weicheren Tastenbereichen nötig, wobei ersichtlich ist, daß jegliche Art von individueller Ausgestaltung bis zur Änderung nur einer einzigen Taste in Abänderung zu allen anderen Varianten möglich ist.

Die vorliegende Erfindung wird nachfolgend weiterhin anhand eines in der beigefügten Zeichnung dargestellten Ausführungsbeispiels erläutert, in der
- Fig. 1: eine schematische Darstellung einer Bedienblende eines erfindungsgemäßen programmgesteuerten Haushaltgeräts zeigt und
- Fig. 2: ein Ablaufschema zur Einstellung der Funktionen und deren Tastenbelegung in einem programmgesteuerten Haushaltgerät darstellt.

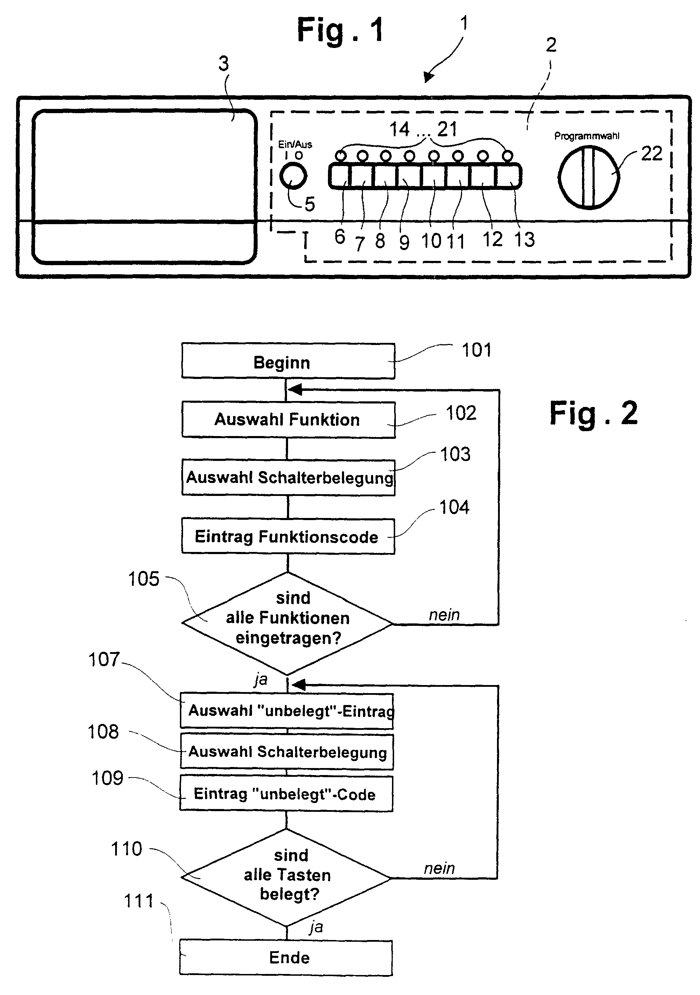

In der Bedienblende 1 gemäß Fig. 1 ist eine Griffplatte 3 für eine dahinter angeordnete Waschmittelschublade vorgesehen. Ersichtlich weist die Bedienblende 1 ferner eine Taste 5 zum Einschalten und Ausschalten des Haushaltgeräts auf und sind weitere Funktionstasten 6 bis 13 vorgesehen. Diesen Funktionstasten sind nicht dargestellte Schalter und Leuchtdioden 14 bis 21 zugeordnet, die beim Betätigen der zugehörigen Taste 6 bis 13 aufleuchten.

Weiterhin ist ein Programmwahlschalter 22 vorgesehen, mit dem durch Drehen das entsprechende Programm vorgewählt werden kann. Mit Hilfe der Funktionstasten 6 bis 13 können weitere Zusatzfunktionen angewählt werden.

Im in Fig. 1 dargestellten Beispiel sind acht Funktionstasten vorgesehen. In einer vereinfachten Ausführungsform, in der beispielsweise nur vier Funktionen schaltbar sein sollen, können beispielsweise die Tasten 6 und 7, 8 und 9, 10 und 11 sowie 12 und 13 durch je eine einzelne, doppelt so breite Funktionstaste ersetzt werden, so daß nur noch vier Funktionstasten vorgesehen sind. Dazu werden die hinter den Tasten 6, 8, 10 und 12 auf einer Platine 2 liegenden Schalter mit der Codierung "unbelegt" versehen, d. h. in den zugeordneten Speicherzellen wird die Codierung für "unbelegt" eingespeichert. Entsprechend behalten die Schalter unter den ehemaligen Tasten 7, 9, 11 und 13 ihre Funktionen oder erhalten neue Funktionen, so daß bei Druck auf die verbliebenen breiteren Funktionstasten nur die Schalter unter den ehemaligen Tasten 7, 9, 11 und 13 eine Programmbeeinflussung erzeugen.

Die Gestaltung der Bedienblende kann weiterhin derart flexibel vorgenommen werden, daß beispielsweise eine zweite Reihe von Funktionstasten unterhalb der ersten Reihe von Funktionstasten 6 bis 13 hardwaremäßig vorgesehen wird und in gleicher Weise wie vorstehend im Laufe der weiteren Entwicklung des programmgesteuerten Haushaltgeräts weitere Funktionstasten an der Bedienblende nacheinander mit neuen Funktionen aufgenommen werden.

Im Sinne der Erhöhung der Schaltsicherheit kann es außerdem von Vorteil sein, alle im dargestellten Beispiel vorhandenen Schalter unter doppelt so breiten Tasten wie dargestellt mit den dem jeweiligen überdeckenden Schalter zugeordneten Funktionen zu belegen. Dann ist der Ausfall eines Schalters unbedeutend, weil ja noch der benachbarte Schalter unter derselben Taste dieselbe Funktionsbelegung aufweist.

Die Codierungen können erfindungsgemäß wie folgt vorgenommen werden:

Beispielsweise kann ein Codierprogramm in der Steuereinheit des programmgesteuerten Haushaltgeräts hinterlegt sein, in dem bestimmte Kombinationen der Betätigung von Funktionstasten 6 bis 13 respektive ihrer zugeordneten Schalter oder des Programmwahlschalters 22 auf der Platine 2 bestimmten Programmbefehlen entsprechen. So könnte beispielsweise durch das Betätigen der Tasten 6, 7 und 8 ein Codiervorgang eröffnet werden.

Ein derartiger Vorgang ist beispielsweise in Fig. 2 dargestellt. Die Betätigung bestimmter Tasten löst den Anfangsschritt 101 aus. In einem Schritt 102 wird dann die gewünschte Funktion ausgewählt, die einer entsprechenden anderen Schalterkombination entspricht. Aus einem vierstelligen Code entsprechend der Betätigung von vier Schaltern ergeben sich bereits 24 unterschiedliche Befehle.

In einem vereinheitlichten System ist jeder Funktion eine gewisse Schalterkombination zugeordnet, die in dem Schritt 102 nunmehr ausgewählt wird. Mit Hilfe eines entsprechenden Codes wird dann die Auswahl der Schalterbelegung in einem Schritt 103 vorgenommen. Beispielsweise wird für die Funktionstaste 6 der Waschprogrammschritt "intensiv" ausgewählt, die Codezahl für diesen Programmschritt und außerdem der Adresscode für die Funktionstaste 6 an den Schaltern erzeugt. Dies geschieht in einem Schritt 104. In einem nächsten Schritt 105 wird gefragt, ob alle Funktionstasten eingetragen wurden, d. h. entsprechend belegt wurden. Dies hängt von dem jeweiligen Typ des Haushaltgerätes ab und wird somit im Herstellungsprozeß individuell angepaßt. Ist die Antwort "nein", wird im Schritt 102 mit der Auswahl der nächsten Funktion fortgefahren. Ist die Antwort "ja", dann wird statt wie oben (Auswahl der Funktion, 102) im Schritt 107 mit der Auswahl der "unbelegt"-Eintragungen begonnen. Im Schritt 108 wird wieder nach der Auswahl der Schalterbelegung für die "unbelegt"-Funktion oder -Funktionen gefragt und im Schritt 109 mit dem Eintrag des Codes für unbelegte Schalter fortgefahren. Wenn nicht alle Schalter belegt sind, werden die Schritte 107 bis 109 so lange wiederholt, bis dies der Fall ist. Diese Entscheidung erfolgt in Schritt 110, wonach, wenn alle Schalter belegt sind, das Programm in einem Schritt 111 endet.

Das erfindungsgemäße programmgesteuerte Haushaltgerät weist somit ein Höchstmaß an Flexibilität bei der Belegung seiner Funktionstasten bzw. Schalter auf, kann an die entsprechenden typenspezifischen Anforderungen angepaßt werden und ist in seinem Hardwarebereich auch für zukünftige Implementierungen neuer Funktionen geeignet.

## Patentansprüche

1. Programmgesteuertes Haushaltgerät mit einer Bedienblende, in der Handhaben, insbesondere Tasten und durch sie betätigbare Schalter, zur Eingabe einzelner Funktionen eines individuellen Betriebsprogrammablaufes angeordnet sind, wobei die Steuerung des Haushaltgeräts Speicherzellen aufweist, die entsprechenden Schaltern zugeordnet sein können, durch deren Betätigen spezielle Funktionen in den Programmablauf des Betriebsprogramms eingebunden werden können, **dadurch gekennzeichnet, daß** jeder Funktion im Programmablauf ein bestimmter Softwarecode beispielsweise Zahlencode zugeordnet ist, der in bestimmten Speicherzellen abgespeichert ist, und daß jeder Schalter mit einer bestimmten Funktion aus der jeweils zugeordneten Speicherzelle belegbar ist.

2. Haushaltgerät nach Anspruch 1, **dadurch gekennzeichnet, daß** zum Speichern des Softwarecodes eine Schnittstelle mit dem Steuergerät verbunden ist, über die ein Dateneingabegerät mit den Speicherzellen verbindbar ist.

3. Haushaltgerät nach Anspruch 1, **dadurch gekennzeichnet, daß** zum Speichern des Softwarecodes eine jeweils vorbestimmte Kombination von Bedienungshandlungen vorgesehen ist.

4. Haushaltgerät nach einem der Ansprüche 1 bis 3, **dadurch gekennzeichnet, daß** ein oder mehrere Schalter mit einem Softwarecode für "unbelegt" in der zugeordneten Speicherzelle belegbar sind.

5. Haushaltgerät nach einem der Ansprüche 1 bis 4, **dadurch gekennzeichnet, daß** die Bedienblende (1) eine Folienabdeckung aufweist, die in den Tastenbereichen weicher ist als in den Nichttastenbereichen.

## Claims

1. Program-controlled domestic appliance with a control panel, in which controls, particularly buttons and switches actuable by them, for input of individual functions of an individual operating program sequence are arranged, wherein the control of the domestic appliance comprises memory cells with which corresponding switches can be associated, through the actuation of which special functions can be incorporated into the program sequence of the operating program, **characterised in that** a specific software code, for example a numerical code, is associated with each function in the program sequence and is stored in specific memory cells and that each switch can be given a specific function from the respectively associated memory cell.

2. Domestic appliance according to claim 1, **characterised in that** for storage of the software code an interface is connected with the control apparatus, by way of which a data input apparatus can be connected with the memory cells.

3. Domestic appliance according to claim 1, **characterised in that** for storage of the software code a respective predetermined combination of control procedures provided.

4. Domestic appliance according to one of claims 1 to 3, **characterised in that** one or more switches can be given a software code for "unoccupied" in the associated memory cell.

5. Domestic appliance according to one of claims 1 to 4, **characterised in that** the control panel (1) has a film cover which is softer in the button regions than in the non-button regions.

## Revendications

1. Appareil ménager commandé par programme avec un écran de réglage dans lequel des dispositifs de manipulation, notamment des touches et des interrupteurs pouvant être actionnés par elles, sont disposés pour introduire différentes fonctions d'un déroulement de programme d'exploitation individuel, la commande de l'appareil ménager présentant des cellules de mémoire qui peuvent être associées à des interrupteurs correspondants, par l'actionnement desquels des fonctions spéciales dans le déroulement de programme du programme d'exploitation peuvent être liées, **caractérisé en ce qu'**un certain code de logiciel, par exemple un code numérique, est associé à chaque fonction dans le déroulement de programme, qui est mémorisé dans certaines cellules de mémoire, et **en ce que** chaque interrupteur peut être affecté d'une certaine fonction à partir de la cellule de mémoire à chaque fois associée.

2. Appareil ménager selon la revendication 1, **caractérisé en ce que** pour enregistrer le code de logiciel une interface est reliée à l'appareil de commande, au moyen de laquelle un appareil d'entrée de données peut être relié aux cellules de mémoire.

3. Appareil ménager selon la revendication 1, **caractérisé en ce que** pour enregistrer le code de logiciel une combinaison à chaque fois prédéterminée des manipulations de commande est prévue.

4. Appareil ménager selon l'une des revendications 1 à 3, **caractérisé en ce qu'**un ou plusieurs interrupteurs peuvent être affectés d'un code de logiciel pour « non occupé » dans la cellule de mémoire associée.

5. Appareil ménager selon l'une des revendications 1 à 4, **caractérisé en ce que** l'écran de réglage (1) présente un recouvrement par feuille qui est plus mou dans les zones à touches que dans les zones sans touches.
